# EUROPEAN PATENT APPLICATION

(11) **EP 4 756 967 A1**
(43) Date of publication of application: **10.06.2026**
(21) Application number: 23947268.1
(22) Date of filing: 26.09.2023
(51) Int. Cl.: H01M 10/058, H01M 10/44

(54) **BATTERY MANUFACTURING PROCESS, BATTERY TREATMENT DEVICE, BATTERY, AND POWER-CONSUMING DEVICE**

(30) Priority: 03.08.2023 CN 202310973398
(71) Applicant: Contemporary Amperex Technology Co., Limited, Ningde, Fujian 352100 (CN)
(72) Inventor: WU, Kai, Ningde, Fujian 352100 (CN); XIE, Lan, Ningde, Fujian 352100 (CN); SHA, Ying, Ningde, Fujian 352100 (CN); SONG, Shuai, Ningde, Fujian 352100 (CN); LIN, Zhen, Ningde, Fujian 352100 (CN); LI, Xiao, Ningde, Fujian 352100 (CN)
(74) Representative: Ziebig Hengelhaupt Intellectual Property Attorneys Patentanwaltskanzlei PartGmbB
(86) International application number: PCT/CN2023/121729
(87) International publication number: WO 2025/025329

(57) **Abstract**

The present application relates to the technical field of batteries, and particularly to a battery manufacturing process, a battery treatment device, a battery, and a power-consuming device. The battery manufacturing process comprises: obtaining a battery to be subjected to treatment, and subjecting the battery to electrolyte injection; and charging the battery before sodium in the battery is reduced at the negative electrode. In the present application, the battery is charged before sodium in the battery is reduced at the negative electrode; during the process of charging the battery, water can receive electrons at the negative electrode to undergo a reduction reaction, so as to produce hydrogen and hydroxy radicals, or water is decomposed in the electrolyte to produce hydrogen ions, and the hydrogen ions can receive the electrons at the negative electrode to undergo a reduction reaction so as to produce hydrogen; in such a way, water in the battery can be removed; after the water removal, sodium is reduced at the negative electrode to produce an elementary sodium metal, thus reducing the risk of the reduced sodium reacting with water, reducing a loss of battery capacity, and improving the cycling performance of the battery.

## Description

### CROSS-REFERENCE TO RELATED APPLICATIONS

This application claims priority to the Chinese Patent Application No. 202310973398.6 filed on August 3, 2023, which is incorporated herein by reference in its entirety.

### TECHNICAL FIELD

This application relates to the technical field of batteries, in particular, to a battery manufacturing process, a battery treatment device, a battery, and an electric device.

### BACKGROUND

Secondary batteries have advantages such as high energy density, high output voltage, high safety, no pollution, and no memory effect, and have been widely used in various consumer electronic products and electric vehicles.

Water inside the battery affects the performance of the battery. A source of water inside the battery includes water in electrode sheets, water in an electrolyte, and the like. To improve the performance of the battery, a water content in the battery needs to be strictly controlled in a battery preparation process.

### SUMMARY

The main object of this application is to provide a battery manufacturing process, to improve the cycling performance of battery.

To achieve the above object, this application provides a battery manufacturing process, including:
acquiring a battery to be treated;
injecting an electrolyte into the battery; and
charging the battery before sodium in the battery is reduced at a negative electrode.

In the prior art, water is generally removed from batteries through high-temperature baking, but in this water removal method, the water inside the battery cannot be effectively removed.

In this application, water is removed through charge. Specifically, a battery to be treated is obtained; and then an electrolyte is injected into the battery. Considering water in electrode sheets and a separator, an electrolyte is injected into the battery to wet the electrode sheets and the separator, thereby causing water within the electrode sheets and the separator to diffuse into the electrolyte, facilitating subsequent removal of water.

For a sodium battery, before an additive forms a film at the negative electrode, sodium ions first reduce on a current collector. It can be understood that reduction of sodium at the negative electrode to elemental sodium metal may include reduction of sodium on a surface of the negative electrode to elemental sodium metal, and may also include a case that elemental sodium metal is intercalated into the negative electrode (for example, when the negative electrode includes a negative electrode active material, the elemental sodium metal is intercalated into a layered negative electrode active material). The reduced sodium metal has high activity and is prone to violent reactions with water in the battery, generating gases such as H₂, thereby causing significant capacity loss.

To solve the above problems, in this application, the battery is charged before sodium in the battery is reduced at the negative electrode. In the process of charging the battery, water may receive electrons at the negative electrode and undergo a reduction reaction, producing hydrogen gas and hydroxide; or water may decompose in the electrolyte to generate hydrogen ions, and the hydrogen ions may receive electrons at the negative electrode and undergo a reduction reaction, producing hydrogen gas. In this way, water in the battery is removed. After removing the water, sodium is reduced at the negative electrode to generate elemental sodium metal, reducing the risk of reaction between the reduced sodium and water, alleviating the problem of battery capacity loss, and improving the cycling performance of the battery. That is, before sodium reduction at the negative electrode, water in the cell is removed as much as possible, thereby mitigating adverse effects of water on subsequent operation of the cell.

Optionally, the step of charging the battery includes:
charging the battery at a first charge voltage, where the first charge voltage is higher than a reduction potential of H⁺, and the first charge voltage is lower than a reduction potential of sodium.

The battery is charged at the first charge voltage, where the first charge voltage is higher than the reduction potential of H⁺ and the first charge voltage is lower than the reduction potential of sodium. In this way, at this charge voltage, water undergoes a reduction reaction at the negative electrode, and water obtains electrons at the negative electrode to generate H₂, for example, 2H₂O+4e⁻→H₂+2OH⁻. Alternatively, water reacts with NaPF₆ in the electrolyte to produce hydrogen ions, and the hydrogen ions receive electrons at the negative electrode to be reduced to H₂, for example, 2H₂O+NaPF₆+4e⁻→NaPO₂F₂+2H₂+4F⁻. It can be understood that at this voltage, sodium reduction and deposition is unlikely, that is, sodium reduction at the negative electrode is unlikely.

Optionally, the battery is a sodium battery without a negative electrode system, and the first charge voltage is lower than a deposition potential of sodium.

Alternatively, the battery is a sodium battery with a negative electrode system, the first charge voltage is lower than a reduction potential of an electrolyte additive, and a range of the reduction potential of the electrolyte additive is 1.5 V to 2.5 V

It can be understood that a battery without a negative electrode system means that a current collector of a negative electrode is not provided with a negative electrode active material. For example, for a sodium battery, " without a negative electrode system" means that ions do not exist in an intercalated, ionic state in a layered material of a negative electrode, but directly form elemental sodium on the negative electrode current collector.

A battery with a negative electrode system means that a current collector of a negative electrode is provided with a negative electrode active material, such as hard carbon. For example, for a sodium battery, "with a negative electrode system" means that ions exist in an intercalated, ionic state in a layered material of a negative electrode.

It can be understood that in a sodium battery without a negative electrode system, sodium is deposited at the negative electrode in an elemental form. When water in the battery is not removed during the sodium deposition, a sodium capacity loss is caused, and further deposition of sodium at the negative electrode is also hindered. It can be understood that if there is still water in the battery before sodium deposition, the deposited sodium reacts violently with water. In this case, the sodium deposited at the negative electrode is unevenly distributed on a surface of the negative electrode, and in the subsequent further deposition of sodium, sodium cannot be evenly deposited on the negative electrode, thus affecting the further deposition of sodium. It can also be understood that uneven deposition of sodium easily causes local dendrites, leading to short circuits in a cell.

Considering that in the process of charging the battery at the first charge voltage, water may receive electrons at the negative electrode and undergo a reduction reaction, producing hydrogen gas and hydroxide; or water may decompose in the electrolyte to generate hydrogen ions, and the hydrogen ions receive electrons at the negative electrode and undergo a reduction reaction, producing hydrogen gas. It is assumed that in the process of charging the battery at the first charge voltage, the electrolyte additive undergoes reactions and participates in film formation at the negative electrode interface, and then the film formed at the negative electrode interface hinders the migration of water or H⁺ to the negative electrode (for example, in the process where water migrates from the positive electrode sheet to the negative electrode, the film formed at the negative electrode interface hinders water from reaching the negative electrode surface, that is, the film formed at the negative electrode interface hinders electron reception of water at the negative electrode). In this case, electron reception of water or H⁺ at the negative electrode is hindered due to the film formed at the negative electrode interface, affecting water removal. Therefore, in the process of charge at the first charge voltage, film formation at the negative electrode should be alleviated, that is, the first charge voltage is lower than a reduction potential of the electrolyte additive. Specifically, when the battery is a sodium battery with a negative electrode system, the first charge voltage is lower than the reduction potential of the electrolyte additive, and a range of the reduction potential of the electrolyte additive is 1.5 V to 2.5 V. For example, in an embodiment, when the reduction potential of the electrolyte additive is 2 V, the first charge voltage is lower than 2 V. When the first charge voltage is lower than the reduction potential of the above electrolyte additive, film formation of the electrolyte additive at the negative electrode can be alleviated, and the water removal effect can be improved.

Optionally, a range of the first charge voltage is 1.0 V to 2.9 V, preferably 1.7 V to 2.9 V, preferably 2.5 V to 2.7 V.

It can be understood that when the first charge voltage is low, the reduction reaction of water is weak, and water cannot be effectively removed. When the first charge voltage is high, sodium reduction and deposition occur. To avoid the above problems, the range of the first charge voltage is 1.0 V to 2.9 V, preferably 1.7 V to 2.9 V, more preferably 2.5 V to 2.7 V.

It can be understood that considering that when the battery is a sodium battery without a negative electrode system, the first charge voltage is lower than the reduction potential of the electrolyte additive, and the reduction potential of the electrolyte additive is greater than 2.9 V and less than or equal to 3.5 V. For the sodium battery without a negative electrode system, in an embodiment, the range of the first charge voltage may be 1.0 V to 2.9 V. That is, in actual operation, an appropriate first charge voltage is determined based on the specific battery type and the reduction potential of the additive in the electrolyte.

When the battery is a sodium battery with a negative electrode system, the first charge voltage is lower than the reduction potential of the electrolyte additive, and a range of the reduction potential of the electrolyte additive is 1.5 V to 2.5 V. In this case, in an embodiment, a range of the first charge voltage may be 1.0 V to 1.49 V. That is, in actual operation, an appropriate first charge voltage is determined based on the specific battery type and the reduction potential of the additive in the electrolyte.

Optionally, the step of charging the battery at the first charge voltage further includes heating the battery.

It can be understood that in the process of charging the battery at the first charge voltage, water may receive electrons at the negative electrode and undergo a reduction reaction, producing hydrogen gas and hydroxide; or water may decompose in the electrolyte to generate hydrogen ions, and the hydrogen ions receive electrons at the negative electrode and undergo a reduction reaction, producing hydrogen gas. When water or H⁺ in the battery continuously diffuses to the negative electrode, the water removal efficiency increases. To effectively diffuse water to the negative electrode in the battery, for example, to release water in the electrode sheets, the battery is heated, so that the battery has an appropriate temperature. Then water in a cell material can quickly dissolve into the electrolyte phase, that is, the electrolyte fully wets the cell material, so that water continuously diffuses to the negative electrode side (or H⁺ generated by hydrolysis of sodium salt migrates to the negative electrode side under the drive of the electric field). Under an effective voltage, water or H⁺ continuously reduces at the negative electrode side to produce hydrogen gas, thereby improving the water removal effect.

It can also be understood that theoretically, the battery may be heated before the battery charges the battery at the first charge voltage, to release water in the cell material into the electrolyte in advance.

Optionally, in the step of heating the battery, a temperature range of the battery is 25°C to 70°C, preferably 45°C to 60°C.

In heating of the battery, the battery temperature is in the range of 25°C to 70°C, preferably 45°C to 60°C, ensuring good water removal effect. It can be understood that the battery temperature cannot be excessively high. If the battery temperature is excessively high, additives with a low boiling point in the battery evaporate, causing the battery to swell. When the hydrogen gas produced inside the battery is released in the charge process, the additives with a low boiling point are discharged out of the battery, causing loss of the additives with a low boiling point and affecting battery performance.

Optionally, the process of charging the battery at the first charge voltage further includes evacuating the battery.

Theoretically, in the water removal process, water reduction leads to production of H₂. In this case, there is a pressure difference between the inside and outside of the battery. In a case where the battery is open, H₂ is released from inside of the battery. However, to accelerate the water removal and drive the chemical equilibrium reaction toward a reaction product direction, for example, 2H₂O+NaPF₆+4e⁻→NaPO₂F₂+2H₂+4F⁻, H₂ is discharged through evacuation, accelerating the water removal. That is, a certain vacuum degree is maintained inside the battery in the water removal process, so that H₂ produced in the cell is promptly evacuated, and the electrochemical equilibrium continuously shifts toward the direction of H₂ production, improving the water removal effect.

Optionally, in the step of evacuating the battery, a range of a vacuum degree inside the battery is greater than or equal to -80 kPa and less than 0 kPa, preferably -30 kPa to -10 kPa.

When the vacuum degree inside the battery is in the above range, H₂ inside the battery can be effectively removed. Further, the vacuum degree cannot be excessively high. An excessively high vacuum degree inside the battery causes electrolyte loss, and an excessively high vacuum degree cause loss of the additives with a low boiling point. Overall, the vacuum degree inside the battery is set in the above vacuum degree range.

Optionally, in the step of charging the battery at the first charge voltage, a charge time is 4 h to 48 h, preferably 6 h to 18 h.

It can be understood that as the charge time of the battery at the first charge voltage is extended, water inside the battery is continuously removed, but when the charge time is further extended, the water removal effect is small. To ensure that water or H⁺ is removed while improving production efficiency and energy consumption to the optimal level, the charge time is 4 h to 48 h, preferably 6 h to 18 h. It can be understood that at 12 h, the water removal efficiency is close to 90%.

Optionally, in the step of charging the battery at the first charge voltage, a charge method includes one of constant voltage charge, stepwise voltage charge, and cyclic charge.

Constant voltage charge is a method in which a charge voltage is constant during a charge time. For example, the charge time is 6 h, and within the 6 h, constant voltage charge is performed at 2 V.

Stepwise voltage charge is a method in which a charge voltage is changed during a charge time. For example, a charge time is 6 h, and within the 6 h, charge is performed at 2 V for 2 h, then at 2.5 V for 2 h, and then at 2.7 V for 2 h.

Cyclic charge is a method in which a charge-discharge cycle is repeated multiple times during a charge time. For example, one charge-discharge cycle includes charge at 0.23C rate to a voltage of 2.5 V and then discharge at 0.23C rate to a voltage of 2.0 V. The charge-discharge process is repeated.

It can be understood that in this application, preferably, constant voltage charge is implemented, but certainly, cyclic charge within a certain voltage range may be implemented, or charge with a stepwise voltage increase is implemented. That is, constant voltage charge is a charge method in which an appropriate constant voltage is maintained. For example, in an embodiment, before sodium reduction, the maximum electric field strength (maximum voltage) is maintained inside the battery, and an electric field direction remains consistent, thereby ensuring that water or hydrogen ions move directionally from the positive electrode to the negative electrode at the maximum rate. The constant voltage charge method can keep the inside of the cell at the maximum electric field strength, which helps to improve the water removal effect.

Optionally, after charging the battery at the first charge voltage, the following step is further included:
charging the battery at a second charge voltage, where the second charge voltage is higher than a reduction potential of sodium and/or higher than a reduction potential of an electrolyte additive.

It can be understood that water removal is performed before sodium reduction, and after water removal, the battery is charged again. The battery is charged at the second charge voltage, where the second charge voltage is higher than the reduction potential of sodium and/or higher than the reduction potential of the electrolyte additive. In this way, sodium undergoes reduction or sodium ions are intercalated into the negative electrode active material, or the additive in the electrolyte form a film on the negative electrode. It can be understood that for a sodium secondary battery with a negative electrode system (the negative electrode includes a negative electrode active material), in the second charge process, the second charge voltage higher than the reduction potential of the electrolyte additive can enable the electrolyte additive to participate in film formation to protect the interface; for a sodium secondary battery without a negative electrode system, the second charge voltage higher than the reduction potential of sodium enables effective sodium deposition at the negative electrode.

Optionally, a range of the second charge voltage is greater than 2.9 V and less than or equal to 4.2 V.

The range of the second charge voltage satisfies the above range. For a sodium secondary battery without a negative electrode system, sodium deposition can be effectively achieved. For a sodium secondary battery with a negative electrode system, sodium ions can be effectively intercalated into the negative electrode active material.

Optionally, after charging the battery at the second charge voltage, electrolyte injection, evacuation, protective gas injection, and sealing on the battery are further included.

It can be understood that the process of charge at the second charge voltage may be regarded as a formation step. During the battery preparation, the battery needs to undergo formation, and the formation process results in electrolyte loss (for example, part of the electrolyte is evacuated under negative pressure, and part of the electrolyte is reacted). Therefore, after formation, electrolyte injection, evacuation, protective gas injection, and sealing are further implemented.

Optionally, the positive electrode active material of the battery includes at least one of Na₃MnTi(PO₄)₃, Na₃MnV(PO₄)₃, Na₃TiV(PO₄)₃, Na₃Fe₂(PO₄)₃, and Na₃MnZr(PO₄)₃.

The positive electrode active material of the battery in this application includes but is not limited to at least one of Na₃MnTi(PO₄)₃, Na₃MnV(PO₄)₃, Na₃TiV(PO₄)₃, Na₃Fe₂(PO₄)₃, and Na₃MnZr(PO₄)₃.

It can be understood that for a cell on which water removal through "high-temperature baking" is difficult, such as a cell with a Nasicon-type phosphate positive electrode material system, water can be removed by using electrochemical water removal technology, thereby improving the cycling life of the cell and reducing the risk of gas production.

This application further provides a battery treatment device, including:
a battery acquisition unit, configured to acquire a battery to be treated, where the battery is injected with an electrolyte; and
a charge unit, configured to charge the battery before sodium in the battery is reduced at a negative electrode.

The battery treatment device may be used to remove water from the battery. The battery treatment device includes a battery acquisition unit and a charge unit. The battery acquisition unit is configured to acquire a battery to be treated, where the battery is injected with an electrolyte; and the charge unit is configured to charge the battery before sodium in the battery is reduced at the negative electrode.

Optionally, the charge unit includes a first charge unit, the first charge unit is configured to charge the battery at a first charge voltage, the first charge voltage is higher than a reduction potential of H⁺, and the first charge voltage is lower than a deposition potential of sodium.

The charge unit includes a first charge unit, the first charge unit is configured to charge the battery at a first charge voltage, the first charge voltage is higher than a reduction potential of H⁺, and the first charge voltage is lower than a deposition potential of sodium.

The battery is charged at the first charge voltage by the first charge unit, and the first charge voltage is higher than the reduction potential of H⁺ and the first charge voltage is lower than the deposition potential of sodium. In this way, water undergoes reduction reaction at this charge voltage. Also, at this voltage, sodium reduction and deposition are not likely to occur.

Optionally, the charge unit further includes a heating unit, where the heating unit is configured to heat the battery in response to charge of the battery by the first charge unit at the first charge voltage;
and/or the charge unit further includes an evacuation unit, where the evacuation unit is configured to evacuate the battery in response to charge of the battery by the first charge unit at the first charge voltage.

The heating unit heats the battery, so that the battery has an appropriate temperature. Then water in a cell material can quickly dissolve into the electrolyte phase, that is, the electrolyte fully wets the cell material, so that water continuously diffuses to the negative electrode side (or H⁺ generated by hydrolysis of sodium salt migrates to the negative electrode side under the drive of the electric field). Under an effective voltage, water or H⁺ continuously reduces at the negative electrode side to produce hydrogen gas, thereby improving the water removal effect.

The evacuation unit maintains a certain vacuum degree inside the battery in the water removal process, so that H₂ produced in the cell is promptly evacuated, and the electrochemical equilibrium continuously shifts toward the direction of H₂ production, improving the water removal effect.

This application further provides a battery, including a battery prepared in the battery manufacturing process as described.

This application further provides an electric device, where the electric device includes the battery as described.

In this application, the battery is charged to remove water before sodium in the battery is reduced at the negative electrode. In this way, after water removal, sodium is reduced at the negative electrode, reducing the risk of reactions between the reduced sodium and water, alleviating the problem of battery capacity loss, and improving the cycling performance of the battery. That is, before sodium reduction at the negative electrode, water in the cell is removed as much as possible, thereby mitigating adverse effects of water on the subsequent operation of the cell.

Moreover, in the battery manufacturing process of this application, the terminal hydroxyl proton of an alcohol-based substance may also be reduced to generate H₂, thereby improving the battery interface. That is, in the battery manufacturing process of this application, the terminal hydroxyl proton of a compound containing a terminal hydroxyl group can be removed. Specifically, some alcohol-based substances, such as ethylene glycol and 1,3-butanediol, are added to the electrode sheets as plasticizers for the electrode sheets to improve toughness of the electrode sheets. However, as these plasticizers accumulate, an interface impedance is increased, thereby deteriorating battery performance. Through the battery manufacturing process of this application, the above problems can be alleviated, that is, before sodium in the battery is reduced at the negative electrode, the battery is charged, and in the charge process, the terminal hydroxyl proton of the alcohol-based substances can be reduced to generate H₂, alleviating the problem of increased interface impedance caused by these alcohol-based substances.

That is, through the battery manufacturing process of this application, the cycling life of the cell can be prolonged.

### BRIEF DESCRIPTION OF DRAWINGS

To more clearly illustrate the technical solutions in the embodiments of this application or the prior art, the drawing used in the description of the embodiments or the prior art are briefly introduced below. It is clear that the drawings described below are only some embodiments of this application. For those of ordinary skill in the art, other drawings can be obtained based on the structures shown in these drawings without creative effort.
FIG. 1 is a schematic flowchart of a battery manufacturing process in this application;
FIG. 2 is a schematic diagram of a battery module provided in an embodiment of this application;
FIG. 3 is a schematic diagram of a battery pack provided in an embodiment of this application;
FIG. 4 is an exploded view of a battery pack provided in an embodiment of this application shown in FIG. 3; and
FIG. 5 is a schematic diagram of an electric apparatus with a secondary battery serving as a power source provided in an embodiment of this application.

### Description of reference signs

| Sign | Name | Sign | Name |
|---|---|---|---|
| 1 | Battery pack | 3 | Lower case |
| 2 | Upper case | 4 | Battery module |
| 5 | Battery cell | | |

The realization of the object, functional features, and advantages of this application are further described with reference to the embodiments and the accompanying drawings.

### DESCRIPTION OF EMBODIMENTS

The technical solutions in the embodiments of this application are clearly and completely described below with reference to the accompanying drawings in the embodiments of this application. It is clear that the described embodiments are only some but not all embodiments of this application. Based on the embodiments of this application, all other embodiments obtained by those of ordinary skill in the art without creative effort fall within the protection scope of this application.

Below, the embodiments of a battery manufacturing process, a battery treatment device, a battery, and an electric device of this application that are specifically disclosed are described in detail with appropriate reference to the accompanying drawings. However, there may be cases where unnecessary detailed descriptions are omitted. For example, detailed descriptions of well-known matters and repeated descriptions of actually identical structures are omitted. This is to avoid unnecessarily lengthening the following description and to facilitate understanding by those skilled in the art. In addition, the accompanying drawings and the following description are provided to enable those skilled in the art to fully understand this application and are not intended to limit the subject matter recited in the claims.

The "scope" disclosed in this application is defined in the form of a lower limit and an upper limit. A given scope is defined by selecting a lower limit and an upper limit, and the selected lower limit and upper limit define boundaries of a specific scope. The scope defined in this way may include or exclude endpoints and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. In addition, if the minimum range values listed are 1 and 2, and if the maximum range values listed are 3, 4, and 5, then the following ranges are all contemplated: 1-3, 1-4, 1-5, 2-3, 2-4, and 2-5. In this application, unless otherwise specified, the numerical range "a-b" represents an abbreviated representation of any real number combination between a and b, where a and b are both real numbers. For example, the numerical range "0-5" indicates that all real numbers between "0-5" are fully listed in this text, and "0-5" is just an abbreviated representation of these numerical combinations. In addition, when a parameter is expressed as an integer greater than or equal to 2, it is disclosed that the parameter is, for example, the integer 2, 3, 4, 5, 6, 7, 8, 9, 10, 11, 12, or the like.

Unless otherwise specified, all embodiments and optional embodiments of this application may be combined with each other to form a new technical solution.

Unless otherwise specified, all technical features and optional technical features of this application may be combined with each other to form a new technical solution.

Unless otherwise specified, all steps of this application may be performed sequentially or randomly, preferably sequentially. For example, the method includes steps (a) and (b), indicating that the method may include steps (a) and (b) performed sequentially, or may include steps (b) and (a) performed sequentially. For example, the mentioned method may further include step (c), indicating that step (c) may be added to the method in any position, for example, the method may include steps (a), (b), and (c), or may include steps (a), (c), and (b), or may include steps (c), (a), and (b), or the like.

Secondary batteries have advantages such as high energy density, high output voltage, high safety, no pollution, and no memory effect, and have been widely used in various consumer electronic products and electric vehicles.

Water inside the battery affects the performance of the battery. A source of water inside the battery includes water in electrode sheets, water in an electrolyte, and the like. To improve the performance of the battery, a water content in the battery needs to be strictly controlled in a battery preparation process.

To solve the above technical problem, this application provides a battery manufacturing process, to improve cycling performance of battery.

The battery manufacturing process includes: acquiring a battery to be treated and injecting an electrolyte into the battery; and charging the battery before sodium in the battery is reduced at a negative electrode.

In the prior art, water is generally removed from batteries through high-temperature baking, but in this water removal method, the water inside the battery cannot be effectively removed.

In this application, water is removed through charge. Specifically, a battery to be treated is obtained; and then an electrolyte is injected into the battery. Considering water in electrode sheets and a separator, an electrolyte is injected into the battery to wet the electrode sheets and the separator, thereby causing water within the electrode sheets and the separator to diffuse into the electrolyte, facilitating subsequent removal of water.

For a sodium battery, before an additive forms a film at the negative electrode, sodium ions first reduce on a current collector. It can be understood that reduction of sodium at the negative electrode to elemental sodium metal may include reduction of sodium on a surface of the negative electrode to elemental sodium metal, and may also include a case that elemental sodium metal is intercalated into the negative electrode (for example, when the negative electrode includes a negative electrode active material, the elemental sodium metal is intercalated into a layered negative electrode active material). The reduced sodium metal has high activity and is prone to violent reactions with water in the battery, generating gases such as H₂, thereby causing significant capacity loss.

To solve the above problems, in this application, the battery is charged before sodium in the battery is reduced at the negative electrode. In the process of charging the battery, water may receive electrons at the negative electrode and undergo a reduction reaction, producing hydrogen gas and hydroxide; or water may decompose in the electrolyte to generate hydrogen ions, and the hydrogen ions may receive electrons at the negative electrode and undergo a reduction reaction, producing hydrogen gas. In this way, water in the battery is removed. After removing the water, sodium is reduced at the negative electrode to generate elemental sodium metal, reducing the risk of reaction between the reduced sodium and water, alleviating the problem of battery capacity loss, and improving the cycling performance of the battery. That is, before sodium reduction at the negative electrode, water in the cell is removed as much as possible, thereby mitigating adverse effects of water on subsequent operation of the cell.

It can be understood that in the prior art, the water removal method may be vacuum baking, but in this water removal method, the water inside the battery cannot be effectively removed, deteriorating the cycling performance of the battery. The vacuum baking water removal method includes two steps of high-temperature baking and high-temperature wetting. In this application, water in the cell is continuously removed by charging the battery at a first charge voltage, improving the cycling performance of the battery. Further, in this application, the two steps of high-temperature baking and high-temperature wetting in the prior art process are omitted, thereby improving the cell production efficiency.

In an embodiment, a step of electrochemically removing water from the battery includes: charging a battery at a first charge voltage, where the first charge voltage is higher than a reduction potential of H⁺, and the first charge voltage is lower than a reduction potential of sodium.

The battery is charged at the first charge voltage, where the first charge voltage is higher than the reduction potential of H⁺ and the first charge voltage is lower than the reduction potential of sodium. In this way, at this charge voltage, water undergoes a reduction reaction at the negative electrode, and water obtains electrons at the negative electrode to generate H₂, for example, 2H₂O+4e⁻→H₂+2OH⁻. Alternatively, water reacts with NaPF₆ in the electrolyte to produce hydrogen ions, and the hydrogen ions receive electrons at the negative electrode to be reduced to H₂, for example, 2H₂O+NaPF₆+4e⁻→NaPO₂F₂+2H₂+4F⁻. It can be understood that at this voltage, sodium reduction and deposition is unlikely, that is, sodium reduction at the negative electrode is unlikely.

In an embodiment, the battery is a sodium battery without a negative electrode system, and the first charge voltage is lower than a deposition potential of sodium; alternatively, the battery is a sodium battery with a negative electrode system, the first charge voltage is lower than a reduction potential of an electrolyte additive, and a range of the reduction potential of the electrolyte additive is 1.5 V to 2.5 V.

It can be understood that a battery without a negative electrode system means that a current collector of a negative electrode is not provided with a negative electrode active material. For example, for a sodium battery, "without a negative electrode system" means that ions do not exist in an intercalated, ionic state in a layered material of a negative electrode, but directly form elemental sodium on the negative electrode current collector.

A battery with a negative electrode system means that a current collector of a negative electrode is provided with a negative electrode active material, such as hard carbon. For example, for a sodium battery, "with a negative electrode system" means that ions exist in an intercalated, ionic state in a layered material of a negative electrode.

It can be understood that in a sodium battery without a negative electrode system, sodium is deposited at the negative electrode in an elemental form. When water in the battery is not removed during the sodium deposition, a sodium capacity loss is caused, and further deposition of sodium at the negative electrode is also hindered. It can be understood that if there is still water in the battery before sodium deposition, the deposited sodium reacts violently with water. In this case, the sodium deposited at the negative electrode is unevenly distributed on a surface of the negative electrode, and in the subsequent further deposition of sodium, sodium cannot be evenly deposited on the negative electrode, thus affecting the further deposition of sodium. It can also be understood that uneven deposition of sodium easily causes local dendrites, leading to short circuits in a cell.

Considering that in the process of charging the battery at the first charge voltage, water may receive electrons at the negative electrode and undergo a reduction reaction, producing hydrogen gas and hydroxide; or water may decompose in the electrolyte to generate hydrogen ions, and the hydrogen ions receive electrons at the negative electrode and undergo a reduction reaction, producing hydrogen gas. It is assumed that in the process of charging the battery at the first charge voltage, the electrolyte additive undergoes reactions and participates in film formation at the negative electrode interface, and then the film formed at the negative electrode interface hinders the migration of water or H⁺ to the negative electrode (for example, in the process where water migrates from the positive electrode sheet to the negative electrode, the film formed at the negative electrode interface hinders water from reaching the negative electrode surface, that is, the film formed at the negative electrode interface hinders electron reception of water at the negative electrode). In this case, electron reception of water or H⁺ at the negative electrode is hindered due to the film formed at the negative electrode interface, affecting water removal. Therefore, in the process of charge at the first charge voltage, film formation at the negative electrode should be alleviated, that is, the first charge voltage is lower than a reduction potential of the electrolyte additive. Specifically, when the battery is a sodium battery with a negative electrode system, the first charge voltage is lower than the reduction potential of the electrolyte additive, and a range of the reduction potential of the electrolyte additive is 1.5 V to 2.5 V. For example, in an embodiment, when the reduction potential of the electrolyte additive is 2 V, the first charge voltage is lower than 2 V. When the first charge voltage is lower than the reduction potential of the above electrolyte additive, film formation of the electrolyte additive at the negative electrode can be alleviated, and the water removal effect can be improved.

In an embodiment, a range of the first charge voltage is 1.0 V to 2.9 V, preferably 1.7 V to 2.9 V, more preferably 2.5 V to 2.7 V.

It can be understood that when the first charge voltage is low, the reduction reaction of water is weak, and water cannot be effectively removed. When the first charge voltage is high, sodium reduction and deposition occur. To alleviate the above problems, the range of the first charge voltage is 1.0 V to 2.9 V, preferably 1.7 V to 2.9 V, more preferably 2.5 V to 2.7 V.

It can be understood that considering that when the battery is a sodium battery without a negative electrode system, the first charge voltage is lower than the reduction potential of the electrolyte additive, and a range of the reduction potential of the electrolyte additive is greater than 2.9 V and less than or equal to 3.5 V. For the sodium battery without a negative electrode system, in an embodiment, the range of the first charge voltage may be 1.0 V to 2.9 V. That is, in actual operation, an appropriate first charge voltage is determined based on the specific battery type and the reduction potential of the additive in the electrolyte.

When the battery is a sodium battery with a negative electrode system, the first charge voltage is lower than the reduction potential of the electrolyte additive, and a range of the reduction potential of the electrolyte additive is 1.5 V to 2.5 V. In this case, in an embodiment, a range of the first charge voltage may be 1.0 V to 1.49 V. That is, in actual operation, an appropriate first charge voltage is determined based on the specific battery type and the reduction potential of the additive in the electrolyte.

The above range of 1.0 V to 2.9 V includes the minimum value and maximum value of this range, and every value between this minimum value and maximum value. Specific examples include but are not limited to the point values in the embodiments and 1.0 V, 1.2 V, 1.3 V, 1.4 V, 1.5 V, 1.6 V, 1.7 V, 1.8 V, 1.9 V, 2.0 V, 2.1 V, 2.2 V, 2.3 V, 2.4 V, 2.5 V, 2.6 V, 2.7 V, 2.8 V, 2.9 V, or the like, and range values between any two of the above point values.

The above range of 1.7 V to 2.9 V includes the minimum value and maximum value of this range, and every value between this minimum value and maximum value. Specific examples include but are not limited to the point values in the embodiments and 1.7 V, 1.8 V, 1.9 V, 2.0 V, 2.1 V, 2.2 V, 2.3 V, 2.4 V, 2.5 V, 2.6 V, 2.7 V, 2.8 V, 2.9 V, or the like, and range values between any two of the above point values.

The above range of 2.5 V to 2.7 V includes the minimum value and maximum value of this range, and every value between this minimum value and maximum value. Specific examples include but are not limited to the point values in the embodiments and 2.5 V, 2.55 V, 2.6 V, 2.65 V, 2.7 V, or the like, and range values between any two of the above point values.

In an embodiment, the step of charging the battery at the first charge voltage further includes heating the battery.

It can be understood that in the process of charging the battery at the first charge voltage, water may receive electrons at the negative electrode and undergo a reduction reaction, producing hydrogen gas and hydroxide; or water may decompose in the electrolyte to generate hydrogen ions, and the hydrogen ions receive electrons at the negative electrode and undergo a reduction reaction, producing hydrogen gas. When water or H⁺ in the battery continuously diffuses to the negative electrode, the water removal efficiency increases. To effectively diffuse water to the negative electrode in the battery, for example, to release water in the electrode sheets, the battery is heated, so that the battery has an appropriate temperature. Then water in a cell material can quickly dissolve into the electrolyte phase, that is, the electrolyte fully wets the cell material, so that water continuously diffuses to the negative electrode side (or H⁺ generated by hydrolysis of sodium salt migrates to the negative electrode side under the drive of the electric field). Under an effective voltage, water or H⁺ continuously reduces at the negative electrode side to produce hydrogen gas, thereby improving the water removal effect.

It can also be understood that theoretically, the battery may be heated before charging the battery at the first charge voltage, to release water in the cell material into the electrolyte in advance.

In an embodiment, in the step of heating the battery, a temperature range of the battery is 25°C to 70°C, preferably 45°C to 60°C.

In heating of the battery, the battery temperature is in the range of 25°C to 70°C, preferably 45°C to 60°C, ensuring good water removal effect. It can be understood that the battery temperature cannot be excessively high. If the battery temperature is excessively high, additives with a low boiling point in the battery evaporate, causing the battery to swell. When the hydrogen gas produced inside the battery is released in the charge process, the additives with a low boiling point are discharged out of the battery, causing loss of the additives with a low boiling point and affecting battery performance.

The above range of 25°C to 70°C includes the minimum value and maximum value of this range, and every value between this minimum value and maximum value. Specific examples include but are not limited to the point values in the embodiments and 25°C, 27°C, 29°C, 30°C, 35°C, 40°C, 45°C, 50°C, 55°C, 60°C, 65°C, 70°C, or the like, and range values between any two of the above point values.

In an embodiment, the process of charging the battery at the first charge voltage further includes evacuating the battery.

Theoretically, in the water removal process, water reduction leads to production of H₂. In this case, there is a pressure difference between the inside and outside of the battery. In a case where the battery is open, H₂ is released from inside of the battery. However, to accelerate the water removal and drive the chemical equilibrium reaction toward a reaction product direction, for example, 2H₂O+NaPF₆+4e⁻→NaPO₂F₂+2H₂+4F⁻, H₂ is discharged through evacuation, accelerating the water removal. That is, a certain vacuum degree is maintained inside the battery in the water removal process, so that H₂ produced in the cell is promptly evacuated, and the electrochemical equilibrium continuously shifts toward the direction of H₂ production, improving the water removal effect.

In an embodiment, in the step of evacuating the battery, a range of a vacuum degree inside the battery is greater than or equal to -80 kPa and less than 0 kPa, preferably -30 kPa to -10 kPa.

When the vacuum degree inside the battery is in the above range, H₂ inside the battery can be effectively removed. Further, the vacuum degree cannot be excessively high. An excessively high vacuum degree inside the battery causes electrolyte loss, and an excessively high vacuum degree cause loss of the additives with a low boiling point. Overall, the vacuum degree inside the battery is set in the above vacuum degree range.

The above range greater than or equal to -80 kPa and less than 0 kPa includes the minimum value and maximum value of this range, and every value between this minimum value and maximum value. Specific examples include but are not limited to the point values in the embodiments and -80 kPa, -75 kPa, -70 kPa, -65 kPa, -60 kPa, -55 kPa, -50 kPa, -45 kPa, -40 kPa, -35 kPa, -30 kPa, -25 kPa, -20 kPa, -15 kPa, -10 kPa, -0.1 kPa, or the like, and range values between any two of the above point values.

In an embodiment, in the step of charging the battery at the first charge voltage, a charge time is 4 h to 48 h, preferably 6 h to 18 h.

It can be understood that as the charge time of the battery at the first charge voltage is extended, water inside the battery is continuously removed, but when the charge time is further extended, the water removal effect is small. To ensure that water or H⁺ is removed while improving production efficiency and energy consumption to the optimal level, the charge time is 4 h to 48 h, preferably 6 h to 18 h. It can be understood that the water removal efficiency at 12 h is close to 90%.

The above range of 4 h to 48 h includes the minimum value and maximum value of this range, and every value between this minimum value and maximum value. Specific examples include but are not limited to the point values in the embodiments and 4 h, 6 h, 8 h, 10 h, 12 h, 14 h, 16 h, 18 h, 20 h, 22 h, 24 h, 26 h, 28 h, 30 h, 32 h, 34 h, 36 h, 38 h, 40 h, 42 h, 44 h, 46 h, 48 h, and the like, and range values between any two of the above point values.

In an embodiment, in the step of charging the battery at the first charge voltage, a charge method includes one of constant voltage charge, stepwise voltage charge, and cyclic charge.

Constant voltage charge is a method in which a charge voltage is constant during a charge time. For example, the charge time is 6 h, and within the 6 h, constant voltage charge is performed at 2 V.

Stepwise voltage charge is a method in which a charge voltage is changed during a charge time. For example, a charge time is 6 h, and within the 6 h, charge is performed at 2 V for 2 h, then at 2.5 V for 2 h, and then at 2.7 V for 2 h.

Cyclic charge is a method in which a charge-discharge cycle is repeated multiple times during a charge time. For example, one charge-discharge cycle includes charge at 0.23C rate to a voltage of 2.5 V and then discharge at 0.23C rate to a voltage of 2.0 V. The charge-discharge process is repeated.

It can be understood that in this application, preferably, constant voltage charge is implemented, but certainly, cyclic charge within a certain voltage range may be implemented, or charge with a stepwise voltage increase is implemented. That is, constant voltage charge is a charge method in which an appropriate constant voltage is maintained. For example, in an embodiment, before sodium reduction, the maximum electric field strength (maximum voltage) is maintained inside the battery, and an electric field direction remains consistent, thereby ensuring that water or hydrogen ions move directionally from the positive electrode to the negative electrode at the maximum rate. The constant voltage charge method can keep the inside of the cell at the maximum electric field strength, which helps to improve the water removal effect.

In an embodiment, the battery includes a sodium secondary battery.

The sodium battery in this application includes but is not limited to a sodium secondary battery.

In an embodiment, the battery includes a sodium secondary battery without a negative electrode system.

It can be understood that for a sodium secondary battery without a negative electrode system, a coating may be applied on a current collector to enable uniform deposition of metal on the current collector.

In an embodiment, after charging the battery at the first charge voltage, the following step is included: charging the battery at a second charge voltage, where the second charge voltage is higher than the reduction potential of sodium and/or higher than the reduction potential of the electrolyte additive.

It can be understood that water removal is performed before sodium reduction, and after water removal, the battery is charged again. The battery is charged at the second charge voltage, where the second charge voltage is higher than the reduction potential of sodium and/or higher than the reduction potential of the electrolyte additive. In this way, sodium undergoes reduction or sodium ions are intercalated into the negative electrode active material, or the additive in the electrolyte form a film on the negative electrode. It can be understood that for a sodium secondary battery with a negative electrode system (the negative electrode includes a negative electrode active material), in the second charge process, the second charge voltage higher than the reduction potential of the electrolyte additive can enable the electrolyte additive to participate in film formation to protect the interface; for a sodium secondary battery without a negative electrode system, the second charge voltage higher than the reduction potential of sodium enables effective sodium deposition at the negative electrode.

In an embodiment, the range of the second charge voltage is greater than 2.9 V and less than or equal to 4.2 V.

The range of the second charge voltage satisfies the above range. For a sodium secondary battery without a negative electrode system, sodium deposition can be effectively achieved. For a sodium secondary battery with a negative electrode system, sodium ions can be effectively intercalated into the negative electrode active material.

The above range greater than 2.9 V and less than or equal to 4.2 V includes the minimum value and maximum value of this range, and every value between this minimum value and maximum value. Specific examples include but are not limited to the point values in the embodiments and 2.95 V, 3.0 V, 3.1 V, 3.2 V, 3.3 V, 3.4 V, 3.5 V, 3.6 V, 3.7 V, 3.8 V, 3.9 V, 4.0 V, 4.1 V, 4.2 V, and the like, and range values between any two of the above point values.

In an embodiment, after charging the battery at the second charge voltage, electrolyte injection, evacuation, protective gas injection, and sealing on the battery are included.

It can be understood that the process of charge at the second charge voltage may be regarded as a formation step. During the battery preparation, the battery needs to undergo formation, and the formation process results in electrolyte loss (for example, part of the electrolyte is evacuated under negative pressure, and part of the electrolyte is reacted). Therefore, after formation, electrolyte injection, evacuation, protective gas injection, and sealing are further implemented.

In an embodiment, the positive electrode active material of the battery includes at least one of Na₃MnTi(PO₄)₃, Na₃MnV(PO₄)₃, Na₃TiV(PO₄)₃, Na₃Fe₂(PO₄)₃, and Na₃MnZr(PO₄)₃.

The positive electrode active material of the battery in this application includes but is not limited to at least one of Na₃MnTi(PO₄)₃, Na₃MnV(PO₄)₃, Na₃TiV(PO₄)₃, Na₃Fe₂(PO₄)₃, and Na₃MnZr(PO₄)₃.

It can be understood that for a cell on which water removal through "high-temperature baking" is difficult, such as a cell with a Nasicon-type phosphate positive electrode material system, water can be removed by using electrochemical water removal technology, thereby improving the cycling life of the cell and reducing the risk of gas production.

In an embodiment, this application further provides a battery treatment device, including: a battery acquisition unit, configured to acquire a battery to be treated, where the battery is injected with an electrolyte; and a charge unit configured to charge the battery before sodium in the battery is reduced at the negative electrode.

The battery treatment device may be used to remove water from the battery. The battery treatment device includes a battery acquisition unit and a charge unit. The battery acquisition unit is configured to acquire a battery to be treated, where the battery is injected with an electrolyte; and the charge unit is configured to charge the battery before sodium in the battery is reduced at a negative electrode.

In an embodiment, the charge unit includes a first charge unit, the first charge unit is configured to charge the battery at a first charge voltage, the first charge voltage is higher than the reduction potential of H⁺, and the first charge voltage is lower than the reduction potential of sodium.

A water removal unit includes a first charge unit, where the charge unit is configured to charge the battery at a first charge voltage, the first charge voltage is higher than the reduction potential of H⁺, and the first charge voltage is lower than the reduction potential of sodium.

The battery is charged at the first charge voltage by the first charge unit, and the first charge voltage is higher than the reduction potential of H⁺ and the first charge voltage is lower than the reduction potential of sodium. In this way, water undergoes reduction reaction at this charge voltage. Also, at this voltage, sodium reduction and deposition are not likely to occur, that is, sodium reduction at the negative electrode is not likely to occur.

In an embodiment, the charge unit further includes a heating unit, where the heating unit is configured to heat the battery in response to charge of the battery by the first charge unit at the first charge voltage; and/or the charge unit further includes an evacuation unit, where the evacuation unit is configured to evacuate the battery in response to charge of the battery by the first charge unit at the first charge voltage.

The heating unit heats the battery, so that the battery has an appropriate temperature. Then water in a cell material can quickly dissolve into the electrolyte phase, that is, the electrolyte fully wets the cell material, so that water continuously diffuses to the negative electrode side (or H⁺ generated by hydrolysis of sodium salt migrates to the negative electrode side under the drive of the electric field). Under an effective voltage, water or H⁺ continuously reduces at the negative electrode side to produce hydrogen gas, thereby improving the water removal effect.

The evacuation unit maintains a certain vacuum degree inside the battery in the water removal process, so that H₂ produced in the cell is promptly evacuated, and the electrochemical equilibrium continuously shifts toward the direction of H₂ production, improving the water removal effect.

In an embodiment, this application further provides a battery, including a battery prepared according to the battery manufacturing process as described above.

In an embodiment, this application further provides an electric device, where the electric device includes the battery as described above.

In this application, the battery is charged to remove water before sodium in the battery is reduced at the negative electrode. In this way, after water removal, sodium is reduced at the negative electrode, reducing the risk of reactions between the reduced sodium and water, alleviating the problem of battery capacity loss, and improving the cycling performance of the battery. That is, before sodium reduction at the negative electrode, water in the cell is removed as much as possible, thereby mitigating adverse effects of water on the subsequent operation of the cell.

Moreover, in the battery manufacturing process of this application, the terminal hydroxyl proton of an alcohol-based substance may also be reduced to generate H₂, thereby improving the battery interface. That is, in the battery manufacturing process of this application, the terminal hydroxyl proton of a compound containing a terminal hydroxyl group can be removed. Specifically, some alcohol-based substances, such as ethylene glycol and 1,3-butanediol, are added to the electrode sheets as plasticizers for the electrode sheets to improve toughness of the electrode sheets. However, as these plasticizers accumulate, an interface impedance is increased, thereby deteriorating battery performance. Through the battery manufacturing process of this application, the above problems can be alleviated, that is, before sodium in the battery is reduced at the negative electrode, the battery is charged, and in the charge process, the terminal hydroxyl proton of the alcohol-based substances can be reduced to generate H₂, alleviating the problem of increased interface impedance caused by these alcohol-based substances.

That is, through the battery manufacturing process of this application, the cycling life of the cell can be prolonged.

In addition, the battery and the electric apparatus in this application are described below with appropriate reference to the accompanying drawings.

It can be understood that the battery includes a battery cell, a battery module, and a battery pack.

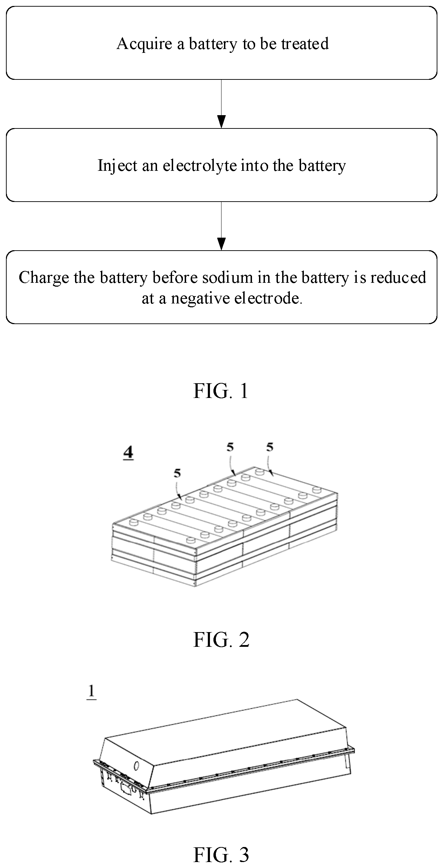

FIG. 2 is an example battery module 4. Refer to FIG. 2. In the battery module 4, multiple battery cells 5 may be arranged sequentially along a length direction of the battery module 4. Certainly, they can also be arranged in any other manner. Further, the multiple battery cells 5 may be fastened by fasteners.

Optionally, the battery module 4 may further include a housing having an accommodation space, and the multiple battery cells 5 are accommodated in the accommodation space.

In some embodiments, the above battery module may alternatively be assembled into a battery pack, and one or more battery modules may be contained in the battery pack. A specific quantity may be determined by those skilled in the art according to the application and capacity of the battery pack.

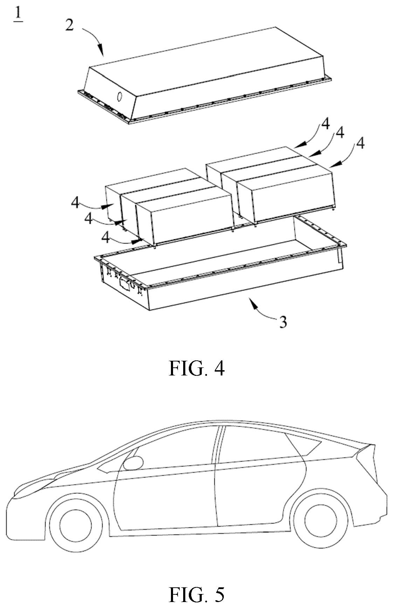

FIG. 3 and FIG. 4 are an example battery pack 1. Refer to FIG. 3 and FIG. 4. The battery pack 1 may include a battery box and multiple battery modules 4 disposed in the battery box. The battery box includes an upper case 2 and a lower case 3, where the upper case 2 may fit the lower case 3, forming a closed space for accommodating the battery module 4. The multiple battery modules 4 may be arranged in the battery box in any manner.

In addition, this application further provides an electric apparatus. The electric apparatus includes at least one of the electrode assembly, battery module, or battery pack provided in this application. The electrode assembly, the battery module, or the battery pack may be used as a power source for the electric apparatus or as an energy storage unit for the electric apparatus. The electric apparatus may include mobile devices (such as mobile phones and notebook computers), electric vehicles (such as pure electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

As the electric apparatus, an electrode assembly, a battery module, or a battery pack may be used according to usage requirements.

FIG. 5 is an example electric apparatus. The electric apparatus is a pure electric vehicle, hybrid electric vehicle, plug-in hybrid electric vehicle, or the like. To satisfy the high power and high energy density requirements of the electric apparatus for the electrode assembly, a battery pack or a battery module may be used.

Another example of the apparatus may be a mobile phone, tablet computer, notebook computer, or the like. Such apparatus usually needs to be light and thin, and an electrode assembly may be used as a power source.

### Examples

### Example 1

### Preparation of positive electrode sheet

A positive electrode active material NaFePO₄, a conductive agent acetylene black, and a binder carboxymethyl cellulose were fully stirred and mixed in an appropriate amount of N-methylpyrrolidone (NMP) in a mass ratio of 95:2:3 to form a uniform positive electrode slurry. The positive electrode slurry was applied to a surface of a positive electrode current collector aluminum foil, dried, cold pressed, and die-cut to obtain a positive electrode sheet with a thickness of 200 µm.

### Preparation of negative electrode sheet

A conductive carbon and a binder carboxymethyl cellulose in a mass ratio of 60:40 were dissolved in a solvent to obtain a conductive coating slurry. A current collector (copper foil) was prepared. The conductive coating slurry was applied to the current collector. After drying, a coating thickness was 2 µm. A negative electrode sheet was prepared through processes such as calendering.

### Preparation of electrolyte

In a glove box injected with argon gas with a water content less than 1 ppm, diethylene glycol dimethyl ether and tetrahydrofuran were mixed in a mass ratio of 1:3, and sodium hexafluorophosphate (NaPF₆) with a concentration of 1.0 mol/L was added. The mixture was stirred uniformly to obtain an electrolyte.

### Separator

A polypropylene membrane was used as a separator.

### Assembly of battery

The prepared positive electrode sheet, negative electrode sheet, and separator were wound into a bare cell according to a preparation process of a wound cell, inserted into a casing, and packaged into a dry battery.

### Battery manufacturing process

After the above dry battery underwent electrolyte injection once, the "constant voltage charge" process was directly started. The battery was charged at a first charge voltage (1.0 V). The process of charge at the first charge voltage further included heating of the battery, where a temperature of the battery was 45°C. Further, the battery was evacuated (a vacuum degree inside the battery was -30 kPa), and a charge time was 24 h.

After the charge, the battery entered the formation stage. After the formation, liquid injection, evacuation, protective gas injection, and sealing are implemented on the battery.

### Examples 2 to 6

Based on Example 1, the first charge voltage was adjusted to obtain Examples 2 to 6.

### Examples 7 and 8

Based on Example 4, the temperature of the battery was adjusted to obtain Examples 7 and 8.

### Examples 9 and 10

Based on Example 4, the vacuum degree inside the battery was adjusted to obtain Examples 9 and 10.

### Examples 11 to 14

Based on Example 4, the time of charging the battery at the first charge voltage was adjusted to obtain Examples 11 to 14.

### Comparative example 1

A battery was prepared using the same steps as in Example 1, and the prepared battery was subjected to water removal through "high-temperature baking". That is, the prepared positive electrode sheet, negative electrode sheet, and separator were wound into a bare cell according to a wound cell preparation process, and inserted into a casing, and packaged into a dry battery. The packaged dry battery was vacuum baked at a baking temperature of 45°C for 60 h. After baking, the electrolyte was injected once, and the battery was fully wet by the electrolyte at 45°C for 24 h. Then, the battery underwent formation, and the electrolyte was injected again. Then the battery was injected with nitrogen, followed by pre-sealing and other processes, to obtain a battery product.

### Cycling performance test

Five battery cells from each of the above examples and comparative example underwent parallel tests. Each battery cell was charged at 0.33C rate to a voltage of 3.65 V at room temperature and then discharged at 0.33C rate to a voltage of 2.5 V, and a measured reversible capacity was denoted as C0. Charge and discharge were repeated until a discharge capacity Cn at a certain cycle satisfied Cn/C0 ≤ 80%, and the total number of cycles was recorded as X-Cycle, where Cn was the reversible capacity at the nth cycle.

**Table 1 List of examples**

| | First charge voltage (V) | Battery temperature (°C) | Vacuum degree inside battery (kPa) | Charge time (h) | Cycling performance @ 50 cls |
|---|---|---|---|---|---|
| Example 1 | 1.0 | 45 | -30 | 24 | 96.1% |
| Example 2 | 1.7 | 45 | -30 | 24 | 96.3% |
| Example 3 | 2.0 | 45 | -30 | 24 | 97.1% |
| Example 4 | 2.5 | 45 | -30 | 24 | 98.0% |
| Example 5 | 2.7 | 45 | -30 | 24 | 98.1% |
| Example 6 | 2.9 | 45 | -30 | 24 | 96.5% |
| Example 7 | 2.5 | 25 | -30 | 24 | 97.3% |
| Example 8 | 2.5 | 70 | -30 | 24 | 97.4% |
| Example 9 | 2.5 | 45 | -80 | 24 | 98.2% |
| Example 10 | 2.5 | 45 | -10 | 24 | 96.7% |
| Example 11 | 2.5 | 45 | -30 | 4 | 96.4% |
| Example 12 | 2.5 | 45 | -30 | 6 | 96.7% |
| Example 13 | 2.5 | 45 | -30 | 18 | 97.6% |
| Example 14 | 2.5 | 45 | -30 | 48 | 98.5% |
| Comparative example 1 | / | / | / | Baking time 60 h | 96.0% |

From the experiment data in Table 1 above, it can be learned that through comparison of the examples and the comparative example, the battery manufacturing process of this application can effectively improve the cycling performance of the battery, and when the first charge voltage is in the range of 2.5 V to 2.7 V, the cycling performance improvement is more significant.

The above are only preferred embodiments of this application and do not limit the patent scope of this application. Any equivalent structural transformations made based on the concept of this application using the specification and drawings of this application, or direct/indirect application in other related technical fields are included in the patent protection scope of this application.

## Claims

1. A battery manufacturing process, comprising:
acquiring a battery to be treated;
injecting an electrolyte into the battery; and
charging the battery before sodium in the battery is reduced at a negative electrode.

2. The battery manufacturing process according to claim 1, wherein the step of charging the battery comprises:
charging the battery at a first charge voltage, wherein the first charge voltage is higher than a reduction potential of H⁺, and the first charge voltage is lower than a reduction potential of sodium.

3. The battery manufacturing process according to claim 1 or 2, wherein a range of the first charge voltage is 1.0 V to 2.9 V, preferably 1.7 V to 2.9 V, more preferably 2.5 V to 2.7 V.

4. The battery manufacturing process according to claim 2 or 3, wherein the step of charging the battery at the first charge voltage further comprises heating the battery.

5. The battery manufacturing process according to claim 4, wherein in the step of heating the battery, a temperature range of the battery is 25°C to 70°C, preferably 45°C to 60°C.

6. The battery manufacturing process according to any one of claims 2 to 5, wherein the process of charging the battery at the first charge voltage further comprises evacuating the battery.

7. The battery manufacturing process according to claim 6, wherein in the step of evacuating the battery, a range of a vacuum degree inside the battery is greater than or equal to -80 kPa and less than 0 kPa, preferably -30 kPa to -10 kPa.

8. The battery manufacturing process according to any one of claims 2 to 7, wherein in the step of charging the battery at the first charge voltage, a charge time is 4 h to 48 h, preferably 6 h to 18 h.

9. The battery manufacturing process according to any one of claims 2 to 8, wherein after charging the battery at the first charge voltage, the following step is further comprised:
charging the battery at a second charge voltage, wherein the second charge voltage is higher than a reduction potential of sodium and/or higher than a reduction potential of an electrolyte additive.

10. The battery manufacturing process according to claim 9, wherein a range of the second charge voltage is greater than 2.9 V and less than or equal to 4.2 V.

11. The battery manufacturing process according to any one of claims 2 to 10, wherein after charging the battery at the second charge voltage, electrolyte injection, evacuation, protective gas injection, and sealing on the battery are further comprised.

12. A battery treatment device, comprising:
a battery acquisition unit, configured to acquire a battery to be treated, wherein the battery is injected with an electrolyte; and
a charge unit, configured to charge the battery before sodium in the battery is reduced at a negative electrode.

13. The battery treatment device according to claim 12, wherein the charge unit comprises a first charge unit, the first charge unit is configured to charge the battery at a first charge voltage, the first charge voltage is higher than a reduction potential of H⁺, and the first charge voltage is lower than a reduction potential of sodium.

14. The battery treatment device according to claim 13, wherein the charge unit further comprises a heating unit, wherein the heating unit is configured to heat the battery in response to charge of the battery by the first charge unit at the first charge voltage;
and/or the charge unit further comprises an evacuation unit, wherein the evacuation unit is configured to evacuate the battery in response to charge of the battery by the first charge unit at the first charge voltage.

15. A battery, comprising a battery prepared in the battery manufacturing process according to any one of claims 1 to 11.

16. An electric device, wherein the electric device comprises the battery according to claim 15.
